# EUROPEAN PATENT APPLICATION

(11) **EP 4 465 489 A1**
(43) Date of publication of application: **20.11.2024**
(21) Application number: 23841848.7
(22) Date of filing: 27.04.2023
(51) Int. Cl.: H02K 1/20, H02K 1/16, H02K 9/193

(54) **STATOR, MOTOR, POWERTRAIN, AND MECHANICAL DEVICE**

(30) Priority: 20.07.2022 CN 202210861561
(71) Applicant: Huawei Digital Power Technologies Co., Ltd., Shenzhen, Guangdong 518043 (CN)
(72) Inventor: YANG, Shaobo, Shenzhen, Guangdong 518043 (CN)
(74) Representative: Maiwald GmbH
(86) International application number: PCT/CN2023/091267
(87) International publication number: WO 2024/016777

(57) **Abstract**

This application provides a stator, a motor, a powertrain, and a mechanical device. The stator includes a stator core, a coil winding, a first end plate, and a second end plate. The stator core has the coil winding inside. The stator core includes a plurality of gaps extending along an axial direction, to form first coolant flow channels. The plurality of gaps are arranged along a circumferential direction of the stator core, and each gap penetrates the stator core along the axial direction. The first coolant flow channel communicates with a liquid inlet region of the stator core. End faces of two ends of the stator core along the axial direction are respectively a first end face and a second end face. The first end plate is mounted on the first end face, and the second end plate is mounted on the second end face. A second coolant flow channel is formed between the first end plate and the first end face, and the second coolant flow channel communicates with the first coolant flow channel. The first end plate includes a plurality of first nozzles, and the first nozzles communicate with the second coolant flow channel and face the coil winding. A quantity of fittings of the motor is small, a leakage risk is low, and heat dissipation effect is good.

## Description

### CROSS-REFERENCE TO RELATED APPLICATIONS

This application claims priority to Chinese Patent Application No. 202210861561.5, filed with the China National Intellectual Property Administration on July 20, 2022 and entitled "STATOR, MOTOR, POWERTRAIN, AND MECHANICAL DEVICE", which is incorporated herein by reference in its entirety.

### TECHNICAL FIELD

This application relates to the field of vehicle technologies, and in particular, to a stator, a motor, a powertrain, and a mechanical device.

### BACKGROUND

A motor is an electromagnetic apparatus that implements electric energy conversion or transfer according to the law of electromagnetic induction, and a main function of the motor is to generate drive torque as a power source of power-consuming devices or various machines. With miniaturization of the motor in a powertrain, power density of the motor gradually increases. As the power density of the motor increases, how to improve heat dissipation efficiency and a heat dissipation capability of the motor becomes an urgent technical problem to be resolved.

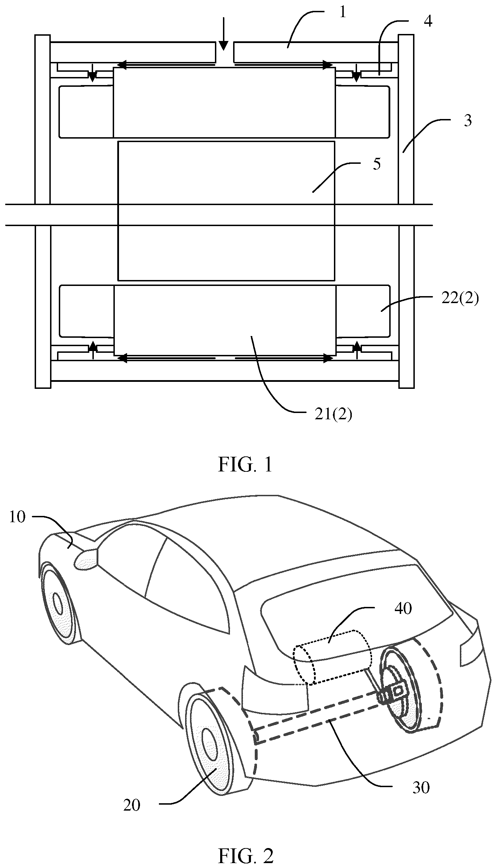

FIG. 1 is a schematic diagram of a partial structure of a motor in the conventional technology. As shown in FIG. 1, currently the motor mainly includes a housing 1, a stator 2, an end cover 3, a spray ring 4, and a rotor 5. The stator 2 includes a stator core 21 and a coil winding 22. The spray ring 4 is assembled between the stator core 21 and the end cover 3, and sprays coolant to the coil winding 22, to dissipate heat of the coil winding 22. To ensure sealing, the spray ring 4 needs to be separately sealed with the stator core 21, the housing 1, and the end cover 3. A leakage risk is high. In addition, due to a manufacturing tolerance, it is difficult to ensure dimension precision, and the spray ring 4 may be damaged by extrusion, resulting in coolant leakage. Consequently, in the conventional technology, a cooling solution of the motor has a high leakage risk, and the motor is prone to damage and has a large quantity of fittings.

### SUMMARY

This application provides a stator, a motor, a powertrain, and a mechanical device, to reduce a quantity of fittings of the motor and a leakage risk of a liquid cooling system of the motor. This system is cost-effective and has good heat dissipation effect.

According to a first aspect, this application provides a stator. The stator includes a stator core, a coil winding, a first end plate, and a second end plate. An inner surface of the stator core is provided with a plurality of first coil slots, and the first coil slots are configured to wind the coil winding, so that the coil winding is at least partially located in the first coil slots. The stator core further includes a plurality of gaps extending along an axial direction, to form the first coolant flow channels. Specifically, the plurality of gaps are arranged in a circumferential direction of the stator core, and each gap penetrates the stator core along the axial direction. The first coolant flow channel communicates with a liquid inlet region of the stator core, and the liquid inlet region communicates with a liquid inlet of the motor, that is, refrigerant enters the liquid inlet region from the liquid inlet, and then enters the first coolant flow channel. End faces of two ends of the stator core along the axial direction are respectively a first end face and a second end face. The first end plate is mounted on a side of the first end face of the stator core, and the second end plate is mounted on a side of the second end face of the stator core. A second coolant flow channel is formed between the first end plate and the first end face, and the second coolant flow channel communicates with the first coolant flow channel, so that the refrigerant may flow from the first coolant flow channel to the second coolant flow channel. The first end plate includes a plurality of first nozzles, the first nozzles communicate with the second coolant flow channel, and the first nozzles face the coil winding. The refrigerant is sprayed from the first nozzles to the coil winding. That is, after the coolant in the technical solution of this application enters the motor from the liquid inlet, the coolant flows through the first coolant flow channel and the second coolant flow channel in sequence, and is sprayed to the coil winding through the first nozzles. Specifically, when the coolant is in the first coolant flow channel and the second coolant flow channel, the coolant is configured to cool the stator core, and then is sprayed to the coil winding to cool the coil winding. In the technical solution of this application, the coolant flow channel of the motor is disposed on the stator, provided that the first end plate and the second end plate are used together. This helps reduce fittings of the motor. In addition, only the first end plate and the second end plate need to be in a sealed connection to the housing, so that a leakage risk can be reduced, and sealing reliability is high. This helps improve heat dissipation effect of the motor. In conclusion, this solution helps ensure the heat dissipation effect of the motor and improve a service life of the motor. In addition, the structure of the motor in this solution is simple, so that costs can be reduced, and assembly and disassembly efficiency can be improved.

In a specific technical solution, a position and a form of the foregoing gap are not limited. For example, a cross section of the gap may have an opening. Specifically, the gap is located on an outer surface of the stator core, and is in a groove form of a first groove. When the stator is mounted on the housing of the motor, the gap and an inner surface of the housing are snap-fitted to form the first coolant flow channel. The structure of the stator in this solution is simple. Alternatively, a cross section of the gap may be a closed hole. Specifically, the gap is located inside the stator core, and is in a form of a through-hole. The through-hole forms the first coolant flow channel. In this solution, the first coolant flow channel is completely located inside the stator core, and therefore a leakage risk is further reduced.

In addition, the stator core may include at least two layers of the first coolant flow channels that are arranged along a radial direction of the stator core, and the first coolant flow channels at each layer are arranged along the circumferential direction. Specifically, the first groove and the through-hole may be included, or through-holes at different layers may be included. This solution helps increase an amount of coolant in a liquid cooling system of the motor, to improve heat dissipation effect of the motor.

In a further technical solution, another second coolant flow channel may be formed between the second end plate and the second end face, and the another second coolant flow channel communicates with the first coolant flow channel. The second end plate includes a plurality of second nozzles, the second nozzles communicate with the another second coolant flow channel, and the second nozzles face the coil winding. In this solution, the coil winding may be cooled at the two ends of the stator core along the axial direction, to improve heat dissipation effect of the coil winding.

When the first end plate and the second end plate are specifically disposed, the first end plate and the second end plate may be symmetrically disposed on two sides of the stator core. This solution helps simplify a manufacturing process and an assembly process of the stator, and enables a heat dissipation capability of the stator to be uniform.

In another technical solution, another second coolant flow channel may be formed between the second end plate and the second end face, and the second end plate has a second nozzle. The stator core is further provided with a third coolant flow channel and a fourth coolant flow channel. The third coolant flow channel and the fourth flow channel extend along the axial direction, penetrate the stator core, and are arranged along the circumferential direction of the stator core. One end of the third coolant flow channel communicates with the second coolant flow channel on the first end face, and the other end of the third coolant flow channel communicates with the second nozzle. One end of the fourth coolant flow channel communicates with the another second coolant flow channel on the second end face, and the other end of the fourth coolant flow channel communicates with the first nozzle. That is, after entering the first coolant flow channel, coolant flows along the first coolant flow channel to two ends. One part of the coolant flows toward the first end face to the second coolant flow channel, then flows to the third coolant flow channel, and then is sprayed from the second nozzle of the second end plate to the coil winding located on a side of the second end face. The other part of the coolant flows toward the second end face to the another second coolant flow channel, then flows to the fourth coolant flow channel, and then is sprayed from the first nozzle of the first end plate to the coil winding located on the first end face. This helps improve heat dissipation uniformity of the stator core along the axial direction. In this embodiment, the coolant is in the stator core for long time. Therefore, heat dissipation effect is improved.

Specifically, the third coolant flow channel and the fourth coolant flow channel may be sequentially disposed at spacings, so that heat dissipation uniformity of the stator core along the axial direction and the circumferential direction can be improved.

In addition, the stator core may be further provided with at least two layers of flow channels that are arranged along the radial direction of the stator core, and each layer of the flow channels includes the third coolant flow channel and the fourth coolant flow channel. This solution helps increase a flow volume of the coolant in the motor and improve heat dissipation effect of the motor.

A position of the liquid inlet region is not specifically limited. In a technical solution, the liquid inlet region is located in a middle part that is along the axial direction and that is of the stator core, so that after the coolant enters the first coolant flow channel from the liquid inlet region, the coolant flows to two ends of the first coolant flow channel along the first coolant flow channel.

In another technical solution, the liquid inlet region may be further located at an end that is of the stator core and that is close to the second end face, so that after the coolant enters the first coolant flow channel from the liquid inlet region, the coolant flows to the first end face along the first coolant flow channel.

The second end plate is attached to the end face of the stator core, the second end plate includes a plurality of second nozzles, and the second nozzles face the coil winding. A fifth coolant flow channel is disposed inside the stator core, and the fifth coolant flow channel extends along the axial direction and penetrates the stator core. One end that is of the fifth coolant flow channel and that is close to the first end face communicates with the second coolant flow channel, and the other end communicates with the second nozzles. After entering the first coolant flow channel from the liquid inlet region, the coolant enters the second coolant flow channel located on the first end face. Then, one part of the coolant is sprayed from the first nozzle of the first end plate to the coil winding located on the first end face of the stator core, and the other part of the coolant flows to the fifth coolant flow channel, flows to the second end plate through the fifth coolant flow channel, and is sprayed from the second nozzle to the coil winding located on the second end face of the stator core. In this embodiment, the fifth coolant flow channel is closer to a heat source. This not only dissipates heat for the coil winding, but also helps enhance heat dissipation effect of the motor.

To form the second coolant flow channel, the first end plate may include a plate body and a protruding portion fastened to a side that is of the plate body and that faces the stator core, and the protruding portion presses against the end face of the stator core. Therefore, a slit exists between the plate body and the end face of the stator core, and the second coolant flow channel is formed. This solution helps reduce a quantity of fittings of the stator and simplify an assembly process of the stator.

To improve uniformity of the coolant sprayed from the first nozzles, one second coolant flow channel may communicate with at least two first coolant flow channels, and one second coolant flow channel may communicate with at least two first nozzles. Because flow volumes of the coolant in different first coolant flow channels are different, and in this technical solution, the second coolant flow channel aggregates the coolant in the plurality of first coolant flow channels and then distributes the coolant to the first nozzles communicating with the second coolant flow channel, the coolant sprayed from all the first nozzles communicating with one second coolant flow channel is uniform, to improve heat dissipation uniformity of the coil winding.

A plurality of second coolant flow channels are formed between the first end plate and the first end face, and at least two adjacent second coolant flow channels communicate with each other. In this solution, the coolant in adjacent second coolant flow channels may be aggregated and then distributed, so that more coolant sprayed from the first nozzles is uniform, and heat dissipation uniformity of the coil winding is further improved.

In a further technical solution, any two adjacent second coolant flow channels may communicate with each other. In this solution, the coolant in all the first coolant flow channels is aggregated in the second coolant flow channel, so that the coolant sprayed from all the first nozzles is uniform, and heat dissipation uniformity of the coil winding is further improved.

In another technical solution, the second coolant flow channel may be formed between the first end plate and the first end face, the second coolant flow channel communicates with all the first coolant flow channels, and the second coolant flow channel communicates with all the first nozzles. In this solution, the coolant in all the first coolant flow channels flows to a same second coolant flow channel, and then is distributed to each first nozzle, to improve uniformity of the coolant sprayed from all the first nozzles, and further improve heat dissipation uniformity of the coil winding.

When the first nozzles are specifically disposed, the first nozzles may be arranged in a ring shape along a circumferential direction of the first end plate. Alternatively, in another technical solution, the first nozzles may be distributed in a local region of the first end plate along a circumferential direction, for example, the first nozzles may be arranged in an arc shape along a circumferential direction of the first end plate. The first nozzles arranged in an arc shape may be located on an upper part of the stator when the stator is in an action state, so that the coolant is sprayed from an upper part of the coil winding to the coil winding, and then flows to a lower part of the coil winding under the action of gravity, to dissipate heat for the lower part of the coil winding. In this solution, the coolant can be fully used to dissipate heat of the coil winding, to improve heat dissipation efficiency.

The first end plate may further include a preset position. The preset position may be specifically a position that is at the top of the stator in a use state and that is highest along a gravity direction. In a region farther from the preset position, the first end plate has a smaller arrangement density of the first nozzles. That is, in a higher region of the first end plate, the first nozzles are more, and more refrigerant is sprayed to the coil winding from a higher position, to fully use the coolant to dissipate heat of the coil winding, and improve heat dissipation efficiency.

In a specific technical solution, the first end plate may include at least two layers of first nozzles that are arranged along the radial direction of the stator core. This solution helps increase a flow volume of coolant sprayed to the coil winding, and improve heat dissipation effect of the coil winding.

When the at least two layers of first nozzles are specifically disposed, spraying directions of the at least two layers of first nozzles are different. This helps increase an area covered by the coolant and improves heat dissipation effect.

When the first end plate and the second end plate are disposed, inner surfaces of the first end plate and the second end plate include a plurality of second coil slots, the second coil slot overlap with the first coil slots, and the coil winding is at least partially located in the second coil slots. In this solution, the first end plate, the second end plate, and the stator core may be first stacked, and then the coil winding is wound. The coil winding enables better fastening effect between the first end plate, the second end plate, and the stator core, and helps improve structural reliability of the stator.

When the foregoing structure of the stator is specifically implemented, the stator core may include a first silicon steel sheet and a second silicon steel sheet. The first silicon steel sheet has a first sub-gap, a plurality of first silicon steel sheets are stacked to form a body the stator core, and the first sub-gaps of the plurality of first silicon steel sheets are connected to form a gap. The second silicon steel sheets are stacked on two ends of the body of the stator core. The second silicon steel sheet has a second sub-gap. An end face of the first silicon steel sheet, the second sub-gap, and an end face of the first end plate form the second coolant flow channel.

In addition, the stator may further include a third silicon steel sheet. The third silicon steel sheets are stacked between the second silicon steel sheet and the body of the stator core, the third silicon steel sheet has a third sub-gap, and the third sub-gap at least partially overlaps with at least two adjacent second sub-gaps to communicate with at least two adjacent second coolant flow channels. In this solution, the at least two adjacent second coolant flow channels communicate with each other, to improve uniformity of coolant sprayed from the first nozzles.

In a further technical solution, any two adjacent second sub-gaps may communicate with a same third sub-gap, so that any two adjacent second coolant flow channels communicate with each other. In this solution, all the second coolant flow channels communicate with each other, to further improve uniformity of coolant sprayed from the first nozzles.

Specific materials of the first end plate and the second end plate are not limited. For example, the first end plate and the second end plate are plastic end plates or metal end plates.

In another technical solution, the first end plate and the second end plate may also be silicon steel sheets. This helps prepare and install the first end plate and the second end plate. In addition, the first end plate and the second end plate in this solution may also be configured to implement magnetic conduction, to improve electromagnetic performance of the stator core.

The first end plate may further include an end plate body and a nozzle fitting fastened to the end plate body. The end plate body has a liquid outlet communicating with the second coolant flow channel, and an area of the liquid outlet is greater than an area of the first nozzle. The first nozzle is formed on the nozzle fitting, and the first nozzle is opposite to the liquid outlet. In this solution, when a stator is manufactured, trickle impregnation process may be performed when no nozzle fitting is installed. Because an area of the liquid outlet is large, blocking is not likely to occur. After the trickle impregnation process ends, the foregoing nozzle fitting is assembled, to ensure that the first nozzle on the nozzle fitting is not blocked.

A specific structure of the foregoing nozzle fitting is not limited. For example, in a technical solution, the foregoing nozzle fitting may be a fuel injection plate, and the first nozzle is an opening of the fuel injection plate. Alternatively, in another technical solution, the nozzle fitting may also be a nozzle, and the first nozzle is an opening of the nozzle.

According to a second aspect, this application further provides a motor. The motor includes a housing and the stator in the first aspect. The housing has a liquid inlet, the stator is assembled in the housing, and the liquid inlet of the housing communicates with a liquid inlet region of a stator core. The motor has a good heat dissipation effect and a simple structure, and a leakage problem is not likely to occur.

In a specific technical solution, a second groove extending along a circumferential direction may be further inside the housing. The second groove communicates with the liquid inlet, and the second groove is opposite to the liquid inlet region of the stator core, to transport coolant to each first coolant flow channel. In this solution, each first coolant flow channel may communicate with the liquid inlet through the second groove.

When the first end plate and the second end plate are specifically installed, the first end plate and the second end plate are in a sealed connection to an inner surface of the housing. Specifically, sealing connection may be implemented in a manner of interference assembly between the housing and each of the first end plate and the second end plate; or sealing connection may be implemented in a manner of filling a sealing element between the housing and each of the first end plate and the second end plate. This is not limited in this application.

In another technical solution, the housing may further include a convex, and the second end plate presses against the convex. In this solution, when the stator is installed, a side of the second end plate of the stator may extend into the housing until the stator presses against the convex. Precise positioning can be implemented by using the convex, so that an assembly position of the stator is accurate. In addition, the second end plate and the stator core may be more closely attached, so that leakage is not likely to occur.

According to a third aspect, this application further provides a powertrain, where the powertrain includes a gearbox and the motor in the second aspect, the motor is connected to the gearbox via a transmission shaft, and the gearbox is configured to adjust a rotation speed output by the motor. A quantity of fittings of the motor in the powertrain is small, a leakage risk of a liquid cooling system of the motor is low, and this system is cost-effective and has good heat dissipation effect. Costs of the powertrain are low, and heat dissipation effect is good. This helps improve a service life.

According to a fourth aspect, this application further provides a mechanical device. The mechanical device includes an output portion, a drive mechanism, and the motor in the second aspect. The motor is connected to the output portion via the drive mechanism, and the motor is configured to drive the output portion to move. A quantity of fittings of the motor in the mechanical device is small, a leakage risk of a liquid cooling system of the motor is low, and this system is cost-effective and has good heat dissipation effect. Costs of the mechanical device are low, and heat dissipation effect is good. This helps improve a service life.

In a specific technical solution, the mechanical device may be an electric vehicle.

### BRIEF DESCRIPTION OF DRAWINGS

FIG. 1 is a schematic diagram of a partial structure of a motor in the conventional technology;
FIG. 2 is a schematic diagram of a structure of an electric vehicle according to an embodiment of this application;
FIG. 3 is a schematic diagram of a structure of a motor according to an embodiment of this application;
FIG. 4 is a schematic diagram of a cross-sectional structure of an assembly status of a housing and a stator according to an embodiment of this application;
FIG. 5 is a schematic diagram of a structure of a stator according to an embodiment of this application;
FIG. 6 is a schematic diagram of a structure of a housing according to an embodiment of this application;
FIG. 7 is a schematic diagram of a cross-sectional view of a partial structure of a motor according to an embodiment of this application;
FIG. 8 is a schematic diagram of a structure of a first silicon steel sheet according to an embodiment of this application;
FIG. 9 is a schematic diagram of a structure of a second silicon steel sheet according to an embodiment of this application;
FIG. 10 is a schematic diagram of a structure in which a first silicon steel sheet and a second silicon steel sheet are stacked according to an embodiment of this application;
FIG. 11 is a schematic diagram of a structure of a first end plate according to an embodiment of this application;
FIG. 12 is a schematic diagram of a structure in which a second silicon steel sheet and an end plate are assembled according to an embodiment of this application;
FIG. 13 is a schematic diagram of a cross-sectional view of another partial structure of a motor according to an embodiment of this application;
FIG. 14 is a schematic diagram of a structure of a third silicon steel sheet according to an embodiment of this application;
FIG. 15 is a schematic diagram of a structure in which a second silicon steel sheet and a third silicon steel sheet are assembled according to an embodiment of this application;
FIG. 16 is a schematic diagram of another structure of a second silicon steel sheet according to an embodiment of this application;
FIG. 17 is a schematic diagram of a structure in which a second silicon steel sheet and a first end plate are assembled according to an embodiment of this application;
FIG. 18 is a schematic diagram of another structure of a first end plate according to an embodiment of this application;
FIG. 19 is a schematic diagram of another structure of a first end plate according to an embodiment of this application;
FIG. 20 is a schematic diagram of another structure of a first end plate according to an embodiment of this application;
FIG. 21 is a schematic diagram of a cross-sectional view of a partial structure of a motor according to an embodiment of this application;
FIG. 22 is a schematic diagram of a cross-sectional view of another partial structure of a motor according to an embodiment of this application;
FIG. 23 is a schematic diagram of a cross-sectional view of another partial structure of a motor according to an embodiment of this application;
FIG. 24 is a schematic diagram of another structure of a first end plate according to an embodiment of this application;
FIG. 25 is a schematic diagram of another structure of a motor according to an embodiment of this application;
FIG. 26 is a schematic diagram of another structure of a first end plate according to an embodiment of this application;
FIG. 27 is a schematic diagram of another structure of a motor according to an embodiment of this application;
FIG. 28 is a schematic diagram of another structure of a motor according to an embodiment of this application;
FIG. 29 is a schematic diagram of another structure of a motor according to an embodiment of this application;
FIG. 30 is a schematic diagram of another structure of a motor according to an embodiment of this application;
FIG. 31 is a schematic diagram of another structure of a motor according to an embodiment of this application;
FIG. 32 is a schematic diagram of another structure of a motor according to an embodiment of this application;
FIG. 33 is a schematic diagram of a lateral structure of a stator core according to an embodiment of this application;
FIG. 34 is a schematic diagram of another lateral structure of a stator core according to an embodiment of this application; and
FIG. 35 is a schematic diagram of another lateral structure of a stator core according to an embodiment of this application.

### Reference numerals:

10-framework; 20-output portion;
30-drive mechanism; 40-motor;
1-housing; 11-liquid inlet;
12-second groove; 13-convex;
2-stator; 21-stator core;
211-first coil slot; 212-gap;
213-first end face; 214-second end face;
215-first silicon steel sheet; 2151-first sub-gap;
216-second silicon steel sheet; 2161-second sub-gap;
217-third silicon steel sheet; 2171-third sub-gap;
2172-fourth sub-gap; 218-welded joint;
22-coil winding; 23-first end plate;
231-second coil slot; 232-first nozzle;
233-preset position; 234-plate body;
235-protruding portion; 236-end plate body;
237-nozzle fitting; 24-second end plate;
241-second nozzle; 3-end cover;
4-spray ring; 5-rotor;
a-first coolant flow channel; b-second coolant flow channel;
b'-another second coolant flow channel; c-third coolant flow channel;
d-fourth coolant flow channel; and e-fifth coolant flow channel.

### DESCRIPTION OF EMBODIMENTS

To make objectives, technical solutions, and advantages of this application clearer, the following further describes this application in detail with reference to the accompanying drawings.

Terms used in the following embodiments are merely intended to describe specific embodiments, but are not intended to limit this application. Terms "one", "a", "the", "the above", and "this" of singular forms used in this specification and the appended claims of this application are also intended to include expressions such as "one or more", unless the context clearly indicates to the contrary.

Reference to "an embodiment", "a specific embodiment", or the like described in this specification indicates that one or more embodiments of this application include a specific feature, structure, or characteristic described with reference to the embodiments. Terms "include", "have", and their variants all mean "include but are not limited to", unless otherwise specifically emphasized in another manner.

To facilitate understanding of a stator, a motor, a powertrain, and a mechanical device provided in embodiments of this application, the following first describes an application scenario of the stator, the motor, the powertrain, and the mechanical device. Currently, a vehicle is used in more scenarios in production and life, and in particular, application of an electric vehicle is gradually increasing. As a power component of the electric vehicle, a motor plays an important role in performance of the electric vehicle. The motor generates a large amount of heat in a working process. Therefore, an important measure to ensure that the motor works stably and has a long service life is to maintain effective heat dissipation. To resolve problems occurring when a water cooling heat dissipation technology is used, such as a poor heat dissipation effect and a high requirement for structural precision, currently, some motors gradually adopt oil cooling heat dissipation, to replace water cooling heat dissipation. In the conventional technology, a cooling solution of the motor has a high leakage risk, and the motor is prone to damage and has a large quantity of fittings. Therefore, this application provides the stator, the motor, the powertrain, and the mechanical device.

A specific type of the mechanical device in embodiments of this application is not limited. For example, the mechanical device may be an electric vehicle (Electric Vehicle, EV for short), a pure device (Pure Electric Vehicle/Battery Electric Vehicle, PEV/BEV for short), a hybrid electric vehicle (Hybrid Electric Vehicle, HEV for short), a range extended device (Range Extended Electric Vehicle, REEV for short), a plug-in hybrid electric vehicle (Plug-in Hybrid Electric Vehicle, PHEV for short), a new energy vehicle (New Energy Vehicle), a battery management (Battery Management) device, a motor & driver (Motor & Driver), a power converter (Power Converter), a reducer (Reducer), and the like. With reference to the accompanying drawings, the following briefly describes the mechanical device in embodiments of this application by using an electric vehicle as the mechanical device.

FIG. 2 is a schematic diagram of a structure of an electric vehicle according to an embodiment of this application. Refer to FIG. 2. A mechanical device in this embodiment of this application includes a framework 10, an output portion 20, a drive mechanism 30, and a motor 40. The output portion 20, the drive mechanism 30, and the motor 40 are installed on the framework 10, and the motor 40 is connected to the output portion 20 via the drive mechanism 30. The motor 40 is configured to convert electric energy into mechanical energy. The drive mechanism 30 is connected to the motor 40, to transmit the mechanical energy to the output portion 20 of the mechanical device. The output portion 20 is configured to output the mechanical energy generated by the motor 40. In a specific embodiment, when the mechanical device is a vehicle like an electric vehicle, the output portion 20 may be specifically a wheel.

In another embodiment, this application further provides a powertrain. The powertrain includes a motor and a gearbox. The gearbox may be in transmission connection to the motor through a transmission shaft. In a specific embodiment, the mechanical device may further include the powertrain, so that a wheel may be in transmission connection to the gearbox through a drive mechanism, to implement transmission connection with the motor. A driving force output by the motor may be transferred to the gearbox through the transmission shaft. The gearbox may change, based on different driving working conditions of an electric vehicle, a driving force output by the powertrain, to drive the wheel to rotate at different speeds. This implements variable-speed driving of the electric vehicle.

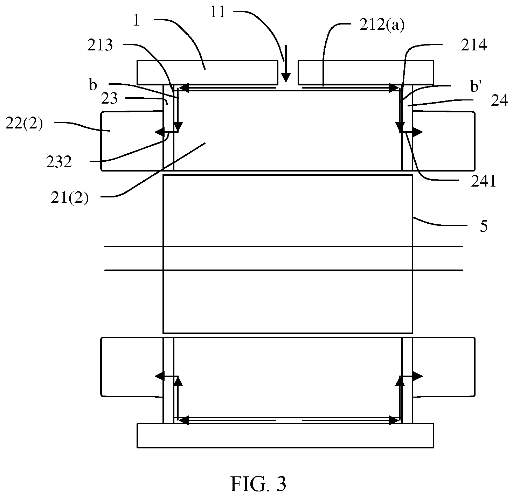

FIG. 3 is a schematic diagram of a structure of a motor according to an embodiment of this application. Refer to FIG. 3. The motor in this embodiment of this application includes a housing 1, a stator 2, and a rotor 5. The stator 2 and the rotor 5 are sleeved coaxially, the rotor 5 is sleeved inside the stator 2, and the stator 2 is assembled inside the housing 1. When the rotor 5 rotates relative to the stator 2, a magnetic field may be generated, to form a driving force.

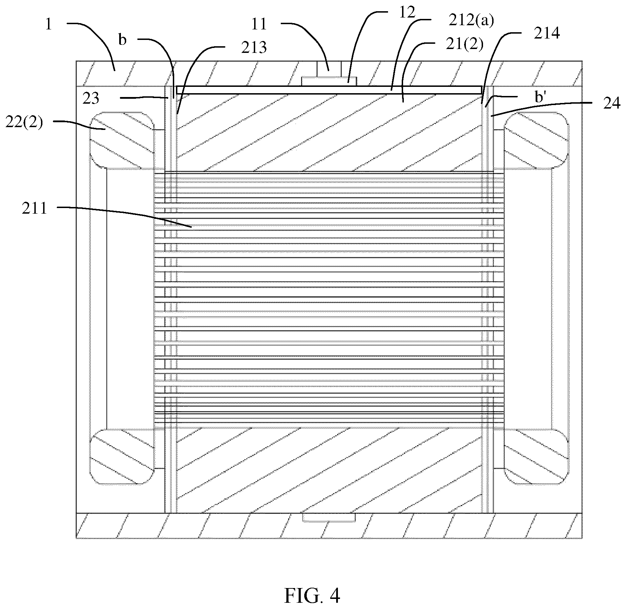

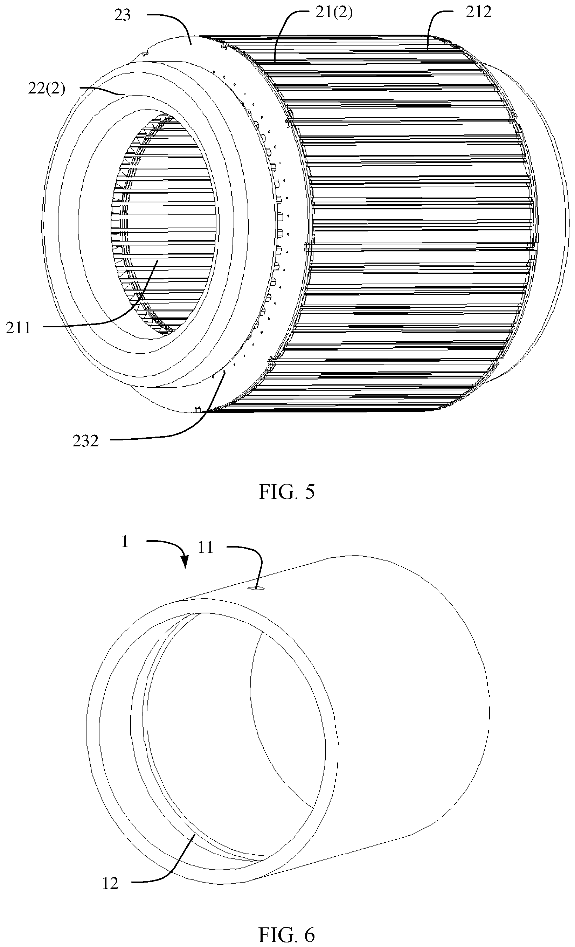

FIG. 4 is a schematic diagram of a cross-sectional structure of an assembly status of a housing and a stator according to an embodiment of this application. FIG. 5 is a schematic diagram of a structure of a housing according to an embodiment of this application. Refer to FIG. 3 to FIG. 5. In the embodiments of this application, the housing 1 has a liquid inlet 11, and the liquid inlet 11 communicates with a liquid inlet region of the stator 2. The liquid inlet 11 leads coolant into an inner cavity of the motor, specifically, leads the coolant into the liquid inlet region, and then the coolant is distributed through flow channels, to cool the motor. The stator 2 includes a stator core 21, a coil winding 22, a first end plate 23, and a second end plate 24. There is a plurality of first coil slots 211 on an inner surface of the stator core 21. The coil winding 22 is wound around the first coil slots 211, so that the coil winding 22 is at least partially located in the first coil slots 211, and the coil winding 22 protrudes from two ends of the stator core 21 along an axial direction. The stator core 21 includes a plurality of gaps 212 extending along the axial direction, to form first coolant flow channels a. The plurality of gaps 212 are arranged along a circumferential direction and penetrate the stator core 21 along the axial direction. The first coolant flow channels a communicate with a liquid inlet region of the stator core 21, and the coolant may also flow to the first coolant flow channels a. The first coolant flow channels a located on a periphery of the stator core 21 may cool the stator core 21 along the periphery of the stator core 21. The first end plate 23 and the second end plate 24 are respectively located at the two ends of the stator core 21 along the axial direction. Specifically, end faces of the two ends of the stator core 21 along the axial direction are respectively a first end face 213 and a second end face 214. The first end plate 23 is mounted on a side of the first end face 213 of the stator core 21, and the second end plate 24 is mounted on a side of the second end face 214 of the stator core 21. A second coolant flow channel b is formed between the first end plate 23 and the first end face 213 of the stator core 21. Because the first coolant flow channel a penetrates the stator core 21 along the axial direction, there is an opening of the first coolant flow channel a on the first end face 213, and the second coolant flow channel b communicates with the first coolant flow channel a. The first end plate 23 includes a plurality of first nozzles 232. The first nozzle 232 communicates with the second coolant flow channel b, and the first nozzle 232 faces the coil winding 22. In this solution, the coolant flows through the first coolant flow channel a to the second coolant flow channel b, and then is sprayed from the first nozzle 232 to the coil winding 22, to cool the coil winding 22. In the technical solution of this application, the coolant flow channel of the motor is disposed on the stator 2, provided that the first end plate 23 and the second end plate 24 are used. This helps reduce a quantity of fittings of the motor. In addition, only the first end plate 23 and the second end plate 24 need to be in a sealed connection to the housing 1, so that a leakage risk can be reduced and sealing reliability is high. This helps improve heat dissipation effect of the motor. In conclusion, this solution helps ensure the heat dissipation effect of the motor and prolong a service life of the motor. In addition, the structure of the motor in this solution is simple, so that costs can be reduced, and assembly and disassembly efficiency can be improved.

It should be noted that, in embodiments of this application, the liquid inlet region of the stator 2 is a region in which the coolant can flow to the first coolant flow channel a, and is not a specific structure. In addition, in embodiments of this application, the "communication" between two structures means that the coolant may flow in the two structures, but an intermediate structure may be alternatively disposed. In addition, the axial direction in embodiments of this application is an extension direction of a rotating shaft of the rotor 5 of the motor, and the circumferential direction is a rotation direction of the rotor 5 of the motor. Alternatively, the stator 2 may be simplified into a cylindrical structure, and the circumferential direction and the axial direction is a circumferential direction and an axial direction of the cylinder.

Specifically, when the first end plate 23 and the second end plate 24 are in a sealed connection to the housing 1, the first end plate 23 and the second end plate 24 are interference-fitted in the housing 1. Alternatively, a sealing element may be filled between the housing 1 and each of the first end plate 23 and the second end plate 24. That is, the sealing element is filled between the first end plate 23 and the housing 1, and the sealing element is also filled between the second end plate 24 and the housing 1, so that both the first end plate 23 and the second end plate 24 can be in a sealed connection to the housing 1.

In a specific embodiment, a manner of forming the gap 212 of the stator core 21 is not limited. For example, still refer to FIG. 3 to FIG. 5. The gap 212 may be a first groove on an outer surface of the stator core 21, and the first groove and an inner surface of the housing 1 are snap-fitted to form the first coolant flow channel a. This solution helps enable the first coolant flow channel a to form the liquid inlet region, so that the liquid inlet region communicates with the liquid inlet 11. In other words, this solution helps implement communication between the first coolant flow channel a and the liquid inlet 11, to simplify a structure and a preparation process of the stator core 21.

FIG. 6 is a schematic diagram of a structure of a housing according to an embodiment of this application. With reference to FIG. 4 and FIG. 6, in an embodiment, an inner surface of the housing 1 has a second groove 12 extending along a circumferential direction. The second groove 12 communicates with the liquid inlet 11, and coolant may enter the second groove 12 from the liquid inlet 11. After the stator 2 is assembled with the housing 1, the second groove 12 and the stator 2 are snap-fitted to form a flow channel, and the flow channel communicates with the first coolant flow channel a of the stator core 21. Specifically, the second groove 12 may be opposite to the liquid inlet region of the first coolant flow channel a, so that the coolant may flow from the second groove 12 to the first coolant flow channel a.

In a specific embodiment, the first coolant flow channels a are arranged along a circumferential direction of the stator core 21, and the second groove 12 extends along a circumferential direction of the housing 1. In this case, one second groove 12 may be used to communicate with all the first coolant flow channels a, to transmit the coolant to each coolant flow channel. It should be noted that an extension length of the second groove 12 only needs to cover all the first coolant flow channels a. That is, if the first coolant flow channels a are spread across a periphery of the stator core 21, the second groove 12 extends over a periphery of the housing 1. If the first coolant flow channels a are distributed only in a part of a region of the stator core 21, the second groove 12 needs to cover only a region having the first coolant flow channels a.

Still refer to FIG. 3 and FIG. 4. In a specific embodiment, when the liquid inlet region is specifically disposed, the liquid inlet region may be located in the middle of the stator core 21 along an axial direction. After entering the first coolant flow channel a from the liquid inlet region, the coolant separately flows to two ends of the first coolant flow channel a along the first coolant flow channel a. This solution helps make cooling effects at two ends of the stator core 21 in an axial direction uniform, and improve a cooling effect of the motor.

Still refer to FIG. 3 and FIG. 4. In a specific embodiment, the second end plate 24 and the first end plate 23 may be disposed in a similar or same manner. Specifically, another second coolant flow channel b' may be formed between the second end plate 24 and the second end face 214, and the another second coolant flow channel b' also communicates with the first coolant flow channel a. The second end plate 24 also includes a plurality of second nozzles 241. The second nozzle 241 communicates with the another second coolant flow channel b', and the second nozzle 241 faces the coil winding 22. In this solution, heat can be dissipated symmetrically for the stator core 21, and heat can be dissipated symmetrically for the coil winding 22, and heat dissipation effect is uniform.

Specifically, the first end plate 23 and the second end plate 24 may be symmetrically disposed on two sides of the stator core 21. In this solution, there are fewer types of parts of the stator core 21. This helps simplify preparation, storage, and transportation of the parts of the stator core 21, and facilitates assembly of the stator core 21.

The following describes a specific implementation of the stator of the motor in the embodiments.

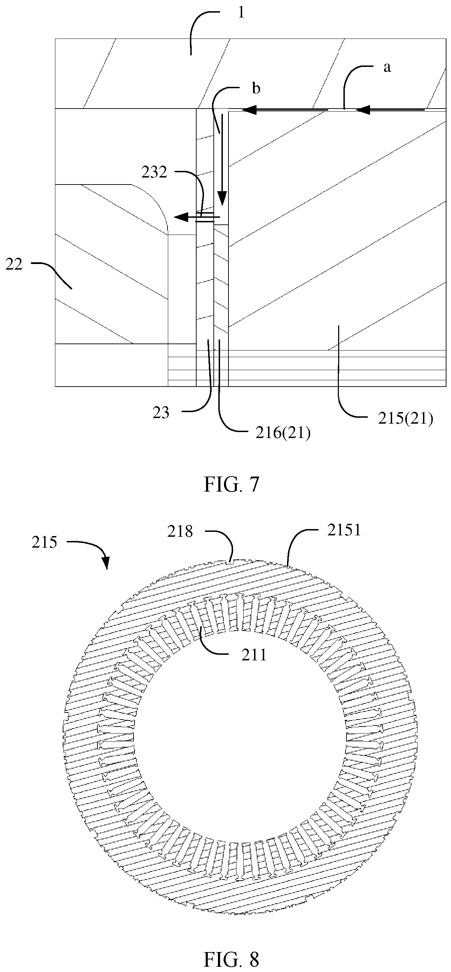

FIG. 7 is a schematic diagram of a cross-sectional view of a partial structure of a motor according to an embodiment of this application. As shown in FIG. 7, the stator core 21 in this embodiment of this application includes a first silicon steel sheet 215 and a second silicon steel sheet 216. A plurality of first silicon steel sheets 215 are stacked to form a body of the stator core, and a plurality of second silicon steel sheets 216 are stacked on two ends of the body of the stator core.

FIG. 8 is a schematic diagram of a structure of a first silicon steel sheet according to an embodiment of this application. As shown in FIG. 8, in a specific embodiment, the first silicon steel sheet 215 includes a first sub-gap 2151. After the plurality of first silicon steel sheets 215 are stacked, the first sub-gaps 2151 of the plurality of first silicon steel sheets 215 are connected to form the gap 212 of the stator core 21. In the embodiment shown in FIG. 8, the first sub-gaps 2151 are openings on a periphery of the first silicon steel sheet 215, so that the first groove may be formed by stacking the first sub-gaps 2151. In addition, an inner surface of the first silicon steel sheet 215 is further provided with a plurality of first coil slots 211 for winding of coil winding 22.

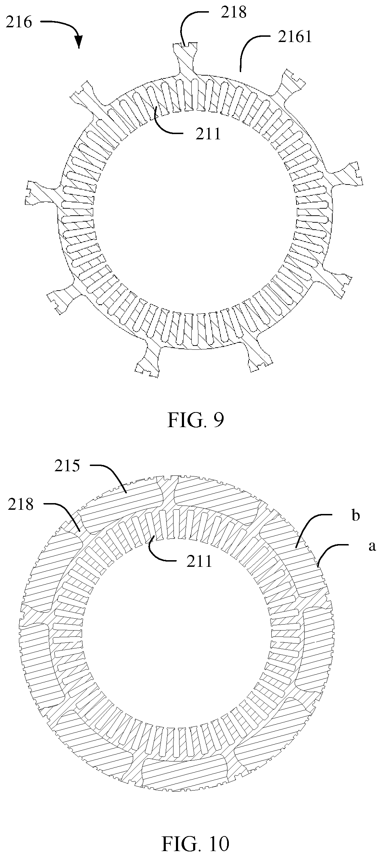

FIG. 9 is a schematic diagram of a structure of a second silicon steel sheet according to an embodiment of this application, and FIG. 10 is a schematic diagram of a structure in which a first silicon steel sheet and a second silicon steel sheet are stacked according to an embodiment of this application. Refer to FIG. 7, FIG. 9, and FIG. 10. The second silicon steel sheet 216 includes a second sub-gap 2161. After the second silicon steel sheets 216 are stacked on the two ends of the body of the stator core 21, the second sub-gap 2161, an end face of the first end plate 23, and the end face of the first silicon steel sheet 215 form the second coolant flow channel b. An inner surface of the second silicon steel sheet 216 is also the provided with the first coil slots 211. Therefore, when the stator core 21 is manufactured, the coil winding 22 may be wound around the first coil slots 211 of the first silicon steel sheet 215 and the second silicon steel sheet 216, so that the plurality of first silicon steel sheets 215 and the plurality of second silicon steel sheets 216 are closely attached. This improves a fastening effect of the stator core 21.

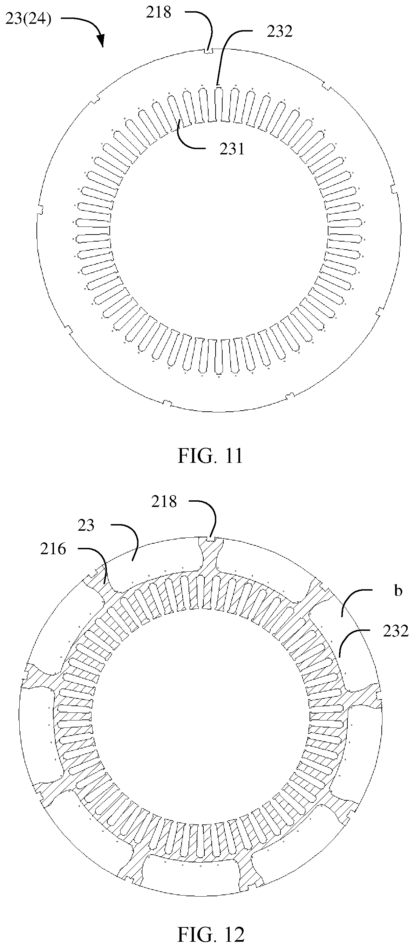

FIG. 11 is a schematic diagram of a structure of a first end plate according to an embodiment of this application. In a specific embodiment, the first end plate 23 and the second end plate 24 may be the same or different. In this embodiment, an example in which the first end plate 23 and the second end plate 24 are the same is used. As shown in FIG. 11, in a specific embodiment, the first end plate 23 and the second end plate 24 may also be silicon steel sheets. This facilitates manufacturing and installation of the first end plate 23 and the second end plate 24. In addition, the first end plate 23 and the second end plate 24 in this solution may also be configured to implement magnetic conduction, to improve electromagnetic performance of the stator core 21. In the technical solution of this application, because most of the gaps of the first silicon steel sheet 215, the second silicon steel sheet 216, and the first end plate 23 are distributed on a periphery of the stator core 21, the stator core 21 is less damaged. This helps enhance electromagnetic performance of the stator core 21. In the embodiment shown in FIG. 11, first nozzles 232 of the first end plate 23 are distributed on the first end plate 23 along a circumferential direction. Specifically, the first nozzles 232 in the embodiment are arranged on the first end plate 23 in a ring shape along the circumferential direction, and are evenly arranged. Similarly, when the second end plate 24 has the second nozzle 241s, the second nozzles 241 may also be distributed on the second end plate 24 along a circumferential direction. Specifically, in this embodiment, the second nozzles 241 are arranged in a ring shape on the second end plate 24 along the circumferential direction, and are evenly arranged.

As shown in FIG. 11, inner surfaces of the first end plate 23 and the second end plate 24 include a plurality of second coil slots 231, and the second coil slots 231 and the first coil slots 211 are overlapped. When the stator core 21 is manufactured, the first silicon steel sheet 215, the second silicon steel sheet 216, the first end plate 23, and the second end plate 24 may be stacked first, and then the coil winding 22 is wound around the first coil slots 211 and the second coil slots 231, so that the first silicon steel sheet 215, the second silicon steel sheet 216, the first end plate 23, and the second end plate 24 have better stacking effect. Therefore, an entire structure of the stator 2 is more reliable. This helps ensure dimension specification precision of the stator core 21 in an axial direction.

Refer to FIG. 8, FIG. 9, and FIG. 11. In this embodiment of this application, welded joints 218 are on a periphery of each of the first silicon steel sheet 215, the second silicon steel sheet 216, the first end plate 23, and the second end plate 24, so that the stator core 21 is assembled in a welding manner. In a specific embodiment, the first silicon steel sheet 215, the second silicon steel sheet 216, the first end plate 23, and the second end plate 24 may be stacked and welded to form an integral stator core 21, and then the coil winding 22 is manufactured. The foregoing structure of the stator core 21 is further strengthened by using the coil winding 22.

Certainly, in other embodiments, the first end plate 23 and the second end plate 24 may also be plastic end plates or metal end plates. This is not limited in this application. When the first end plate 23 and the second end plate 24 are the plastic end plates, insulation performance of the first end plate 23 and the second end plate 24 is strong, and the first end plate 23 and the second end plate 24 are easy to process. When the first end plate 23 and the second end plate 24 are the metal end plates, for example, the first end plate 23 and the second end plate 24 may be made of a material with high strength like steel or aluminum. A processing process is simple, and sealing performance is strong.

FIG. 12 is a schematic diagram of a structure in which a second silicon steel sheet and an end plate are assembled according to an embodiment of this application. With reference to FIG. 10 and FIG. 12, in a specific embodiment, one second coolant flow channel b communicates with at least two first coolant flow channels a, and one second coolant flow channel b communicates with at least two first nozzles 232. Distances between the first coolant flow channels a and the liquid inlet 11 are different. Therefore, flow volumes of coolant in the first coolant flow channels a are different. A flow volume of coolant in the first coolant flow channel a that is closer to the liquid inlet 11 is larger, and a flow volume of coolant in the first coolant flow channel a that is farther from the liquid inlet 11 is smaller. Coolant in the plurality of first coolant flow channels a flows to a same second coolant flow channel b, and then is transmitted to the at least two first nozzles 232 through the second coolant flow channel b. In this case, the first nozzles 232 connected to the same second coolant flow channel b have a same flow volume. That is, the coolant is re-distributed through the second coolant flow channel b. This helps improve uniformity of heat dissipation of the coil winding 22 in the motor along a circumferential direction.

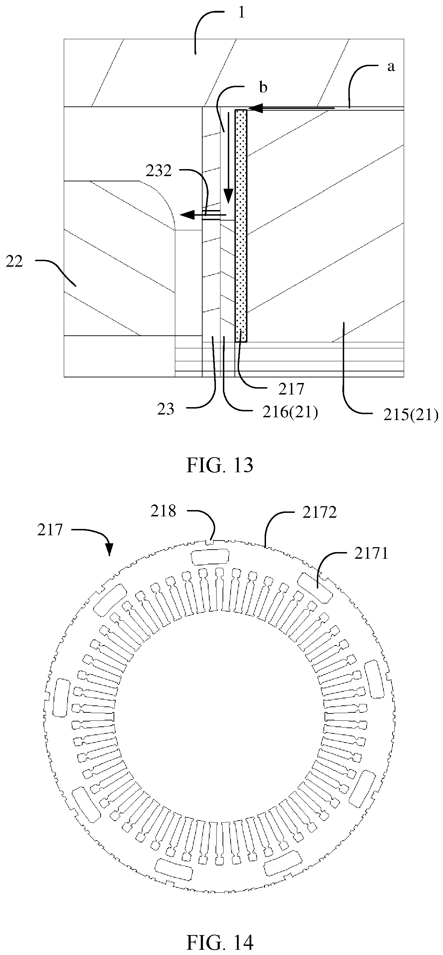

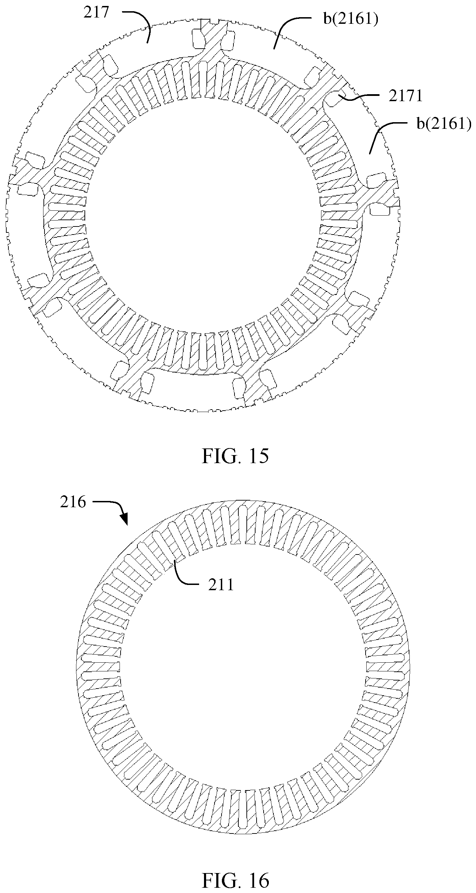

FIG. 13 is a schematic diagram of a cross-sectional view of a partial structure of a motor according to an embodiment of this application. As shown in FIG. 13, in another embodiment, the stator core 21 further includes a third silicon steel sheet 217, and the third silicon steel sheet 217 is superimposed between the second silicon steel sheet 216 and the body of the stator core 21. FIG. 14 is a schematic diagram of a structure of a third silicon steel sheet according to an embodiment of this application. FIG. 15 is a schematic diagram of a structure in which a second silicon steel sheet and a third silicon steel sheet are assembled according to an embodiment of this application. As shown in FIG. 14 and FIG. 15, the third silicon steel sheet 217 has third sub-gaps 2171. The third sub-gap 2171 at least partially overlaps with at least two adjacent second sub-gaps 2161, to communicate with the at least two adjacent second coolant flow channels b. In this solution, flow volumes of the first nozzles 232 communicating with the adjacent second coolant flow channels b may be uniform. This helps better improve uniformity of heat dissipation of the coil winding 22 in the motor along a circumferential direction.

In a specific embodiment, the third silicon steel sheet 217 further has fourth sub-gaps 2172, and the fourth sub-gaps 2172 are opposite to the first sub-gaps 2151, to ensure that the first coolant flow channel a communicates with the second coolant flow channel b.

In the embodiment shown in FIG. 15, one third sub-gap 2171 communicates with two adjacent second sub-gaps 2161, that is, one third sub-gap 2171 communicates with two second coolant flow channels b. In another embodiment, one third sub-gap 2171 may further communicate with three or more second sub-gaps 2161, that is, one third sub-gap 2171 communicates with at least three second coolant flow channels b. This helps simplify the structure of the third silicon steel sheet 217, and helps improve uniformity of heat dissipation of the coil winding 22 in the motor along a circumferential direction.

In another embodiment, still refer to FIG. 15. Any two adjacent second sub-gaps 2161 may communicate with a same third sub-gap 2171, so that any two adjacent second coolant flow channels b communicate with each other. In this solution, the second coolant flow channels b at the entire circumference of the stator core 21 fully communicate with each other, so that flow volumes of the first nozzles 232 along a circumferential direction of the entire stator core 21 are more uniform, to improve heat dissipation uniformity and heat dissipation effect of the coil winding 22.

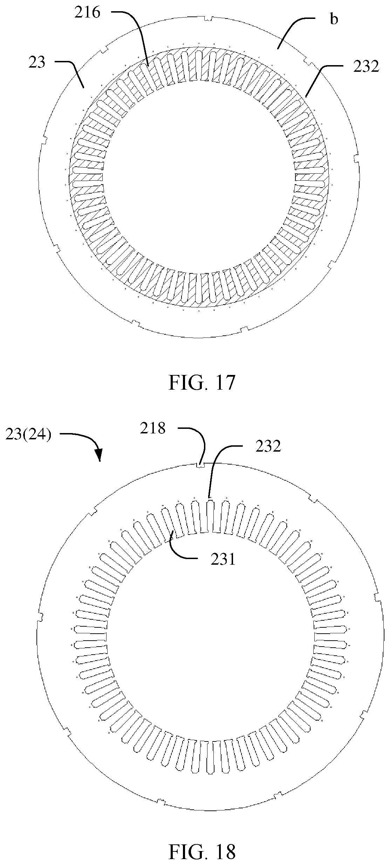

FIG. 16 is another schematic diagram of another structure of a second silicon steel sheet according to an embodiment of this application. FIG. 17 is a schematic diagram of a structure in which a second silicon steel sheet and a first end plate are assembled according to an embodiment of this application. As shown in FIG. 16 and FIG. 17, in a specific embodiment, a maximum diameter of the second silicon steel sheet 216 is less than a maximum diameter of the first end plate 23, so that the second coolant flow channel b between the first end plate 23 and the stator core 21 is annular. That is, the second coolant flow channel b is formed between the first end plate 23 and the first end face 213 of the stator core 21. In this case, the second coolant flow channel b communicates with all the first coolant flow channels a, and the second coolant flow channel b communicates with all the first nozzles 232. In this solution, coolant transmitted by all the first coolant flow channels a is redistributed through one second coolant flow channel b, so that flow volumes of the coolant sprayed from all the first nozzles 232 are close to or the same. In this solution, flow volumes of the first nozzles 232 arranged in a circumferential direction are more uniform, and cooling uniformity of the coil winding 22 is improved.

In this solution, because a size of the second silicon steel sheet 216 is small, the second silicon steel sheet 216 cannot be fastened in a welding manner. Specifically, the second silicon steel sheet 216 may be fastened in an adhesive bonding manner or a riveting manner.

FIG. 18 is a schematic diagram of another structure of a first end plate according to an embodiment of this application. As shown in FIG. 18, in another embodiment, the first nozzles 232 may be further distributed in a local region of the end plate along a circumferential direction. Specifically, the local region may be a region that is close to an upper part of the motor in a use state of the motor. In this region, after coolant is sprayed to the coil winding 22, the coolant flows to a lower part of the coil winding 22 under the action of gravity, to further cool the coil winding 22, and improve heat dissipation efficiency. However, the first nozzle 232 located at the bottom can only cool the bottom of the coil winding 22, and then the coolant drops to an oil groove, is difficult to continue to be used, and has a low utilization rate. In this embodiment, the coolant is sprayed to the coil winding 22 from a high position. Therefore, utilization is high, and heat dissipation efficiency of the coil winding 22 is improved.

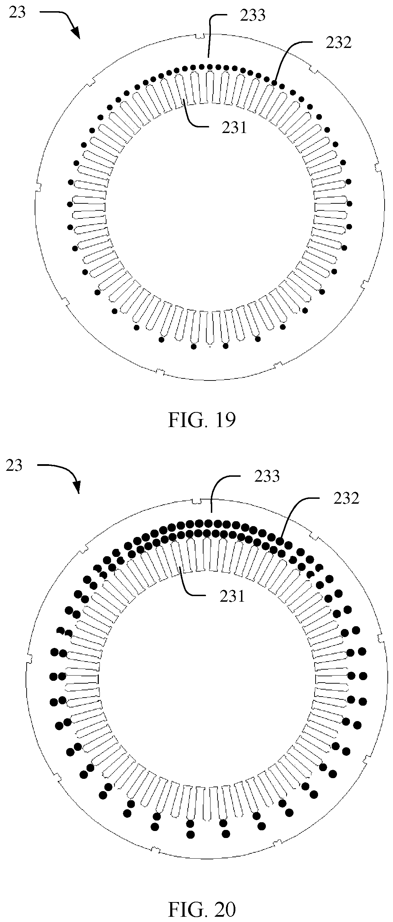

FIG. 19 is a schematic diagram of another structure of a first end plate according to an embodiment of this application. As shown in FIG. 19, in another embodiment, the first end plate 23 may further have a preset position 233, and the preset position 233 may be specifically a position at a top of the first end plate 23 in a use state of the motor. Alternatively, the preset position 233 may be understood as a highest position of the first end plate 23 along a gravity direction in a use state of the motor. In this case, along a circumferential direction, a region farther from the preset position 233 has a smaller arrangement density of the first nozzles 232, and is more sparse. In this solution, a large amount of coolant is sprayed from an upper region to the coil winding 22, and the coolant can also be fully used for heat dissipation, to improve heat dissipation efficiency of the coolant.

FIG. 20 is a schematic diagram of another structure of a first end plate according to an embodiment of this application. As shown in FIG. 20, in a specific embodiment, the first end plate 23 may include at least two layers of first nozzles 232, each layer of first nozzles 232 includes a plurality of first nozzles 232 arranged along a circumferential direction, and different layers of first nozzles 232 are arranged along a radial direction of the stator core 21. This solution helps increase a flow volume of coolant within specific time, that is, can increase a flow speed of the coolant of the motor, to help improve a cooling effect of the motor.

It should be noted that, to make a concept of "layer" in embodiments of this application clearer, the following provides an example for description. Each layer of As includes a plurality of As. Each A has an approximately equal distance from a rotation axis of the motor. In other words, As in each layer of As are arranged in a same circumference, and a plurality of As arranged in a same circumference form one layer of As. As in different layers of As have different distances from a rotation axis of the motor. In other words, As in different layers of As are arranged in different circumferences.

For example, in the embodiment shown in FIG. 20, it may be considered that each layer of first nozzles 232 includes a plurality of first nozzles 232 arranged along a circumferential direction of the stator core 21, and distances between the first nozzles 232 in each layer of first nozzles 232 and a rotation axis of the motor are similar or equal. In other words, the first nozzles 232 in each layer are located in a same circumference and arranged in a circle or an arc shape. Distances between the first nozzles 232 at different layers and the rotation axis are unequal. In other words, the first nozzles 232 at different layers are located at different circumferences. From another perspective, the plurality of first nozzles 232 that have approximately equal distances from the rotation axis form one layer of first nozzles 232.

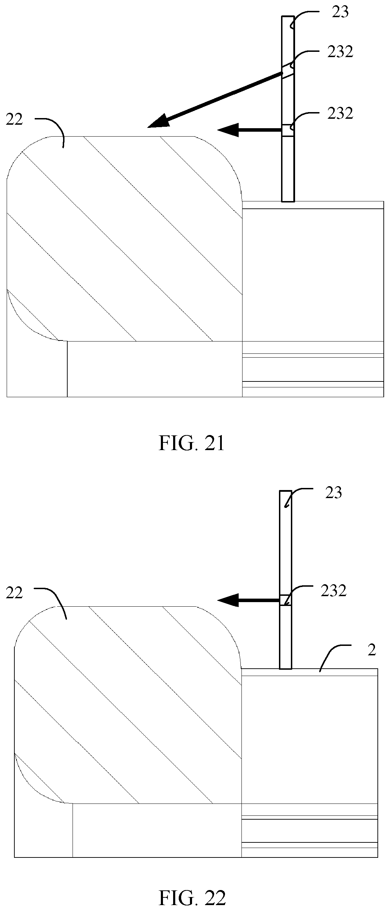

FIG. 21 is a schematic diagram of a cross-sectional view of a partial structure of a motor according to an embodiment of this application. As shown in FIG. 21, in a specific embodiment, when the first end plate 23 includes at least two layers of first nozzles 232, spray directions of the two layers of first nozzles 232 are different. This helps increase a coverage area of coolant, and further improves heat dissipation effect of the coil winding 22 of the motor.

Certainly, in another embodiment, spraying directions of the two layers of first nozzles 232 may also be the same. In addition, when the first end plate 23 includes only one layer of first nozzles 232, the first nozzles 232 may spray the coolant obliquely to the coil winding 22, to improve an area of the coil winding 22 covered by the spray liquid, and improve heat dissipation effect.

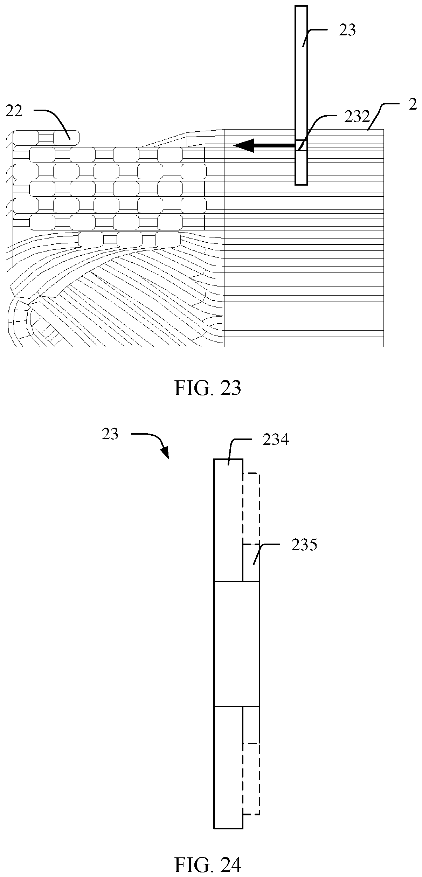

Types of wires of the coil winding 22 may be different. For example, the wire may be a round wire (a cross section is a circle) or a flat wire (a cross section is a flat shape). FIG. 22 is a schematic diagram of a cross-sectional view of another partial structure of a motor according to an embodiment of this application. FIG. 23 is a schematic diagram of a cross-sectional view of another partial structure of a motor according to an embodiment of this application. As shown in FIG. 22, after resin is dripped in round wires of the coil winding 22, there is no slit between the wires. Therefore, a distance between the first nozzle 232 and an axis of the stator 2 may be long, that is, the first nozzle 232 is located in a more outward position in a radial direction, so that coolant is sprayed to the outside of the coil winding 22, the coolant may cover a large area, and a cooling effect is good. As shown in FIG. 23, there is a large slit inside the coil winding 22 of flat wires. Therefore, a distance between the first nozzle 232 and an axis of the stator 2 may be short, that is, the first nozzle 232 is located in a more inward position in a radial direction, so that coolant is sprayed to a side of the coil winding 22, the coolant may enter the slit of the coil winding 22, to perform full heat exchange and achieve a good cooling effect. In the technical solution of this application, the first nozzle 232 is disposed on the first end plate 23, and a position of the first nozzle 232 can be adjusted based on an actual scenario, to improve heat dissipation effect, and flexibility is high.

FIG. 24 is a schematic diagram of another structure of a first end plate according to an embodiment of this application. As shown in FIG. 24, in another embodiment, to form the second coolant flow channel b, the first end plate 23 may include a plate body 234 and a protruding portion 235. The protruding portion 235 is fastened to a side that is of the plate body 234 and that faces the stator core 21. When the first end plate 23 is installed on the stator core 21, the protruding portion 235 presses against the stator core 21, so that the second coolant b flow channel may be formed between the plate body 234 and the first end face 213. In this scheme, the motor has fewer parts. This helps simplify an assembly process of the motor.

The plate body 234 and the protruding portion 235 may be specifically an integrated structure. This facilitates one-time process manufacture. For example, the first end plate 23 may be a metal end plate, and the plate body 234 and the protruding portion 235 may be molded once by using a casting process. Alternatively, the first end plate 23 may also be a plastic end plate, and the plate body 234 and the protruding portion 235 may be molded once by using an injection molding process. This solution can reduce required sealing surfaces, improve sealing performance of the second coolant flow channel b, and reduce a leakage risk.

It should be noted that, when the second end plate 24 is configured to form another second coolant flow channel b', the structure of the first end plate 23 may also be used, that is, the second end plate 24 also includes the plate body 234 and the protruding portion 235. This is not described herein again.

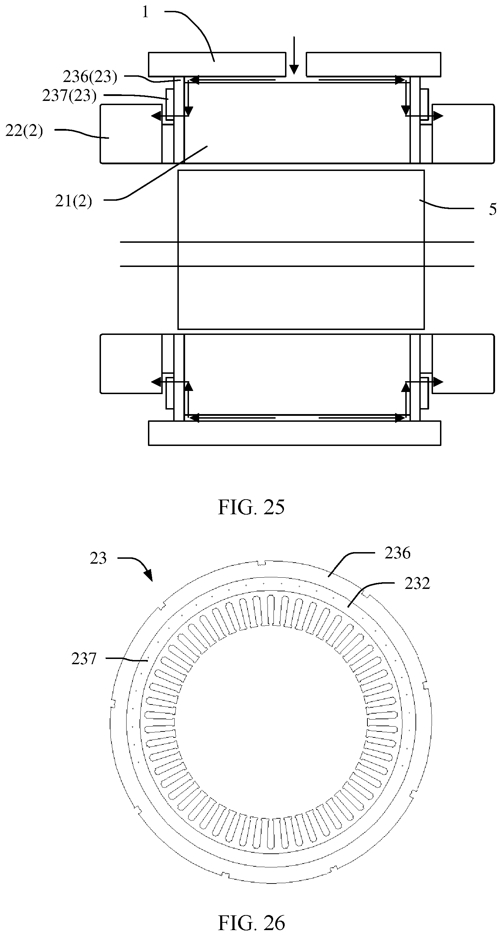

FIG. 25 is a schematic diagram of another structure of a motor according to an embodiment of this application. FIG. 26 is a schematic diagram of another structure of a first end plate according to an embodiment of this application. As shown in FIG. 25 and FIG. 26, in an embodiment, the first end plate 23 includes an end plate body 236 and a nozzle fitting 237 fastened to the end plate body 236. Specifically, the nozzle fitting 237 may be detachably connected to the end plate body 236. The end plate body 236 has a liquid outlet (not shown in the figure) communicating with the second coolant flow channel b, and an area of the liquid outlet is greater than an area of the first nozzle 232. In a production process, the motor needs to perform trickle impregnation enhancement process. Specifically, resin is continuously dripped on the coil winding 22, so that the resin penetrates into the inside of the coil winding 22 and the inside of the first coil slot 211, and then enhancement and curing are performed, to improve strength and an insulation effect of the stator 2. In a process of trickle impregnation, because liquid resin has small viscosity and is easy to flow, the liquid resin spreads to a surface of the first end plate 23 under the action of a capillary force or the like, and the first nozzle 232 that is located on the first end plate 23 and that has a small size is likely to be blocked. However, in this embodiment, the first nozzle 232 is formed on the nozzle fitting 237. Therefore, the trickle impregnation process may be performed before the nozzle fitting 237 is assembled. In this case, a size of the liquid outlet is large, and therefore, the liquid outlet is not likely to be blocked. Then, the nozzle fitting 237 is assembled, so that the first nozzle 232 of the nozzle fitting 237 is opposite to the liquid outlet. Further, the coolant can flow through.

In the embodiment shown in FIG. 26, the nozzle fitting 237 may be specifically a fuel injection plate, and the first nozzle 232 is an opening of the fuel injection plate. In this embodiment, the fuel injection plate may be in a ring shape, or may be in a semicircle shape or the like, provided that the fuel injection plate can cover the liquid outlet and carry the first nozzle 232. In another embodiment, the fuel injection fitting may be specifically a nozzle, and the first nozzle 232 is an opening of the nozzle. In conclusion, a specific form of the nozzle fitting 237 is not limited in this embodiment of this application.

In the foregoing embodiment, the structure of a side that is of the stator core 21 and that faces the first end face and the structure of the first end plate 23 are used as an example for description. In a specific embodiment, a structure that is of the stator core 21 and that faces the second end face may be enabled to have a feature of the structure of the side that is of the stator core and that faces the second end face in the foregoing embodiment, and a structure of the second end plate 24 may be enabled to have a feature of the structure of the first end plate 23 in the foregoing embodiment, which are not described herein again.

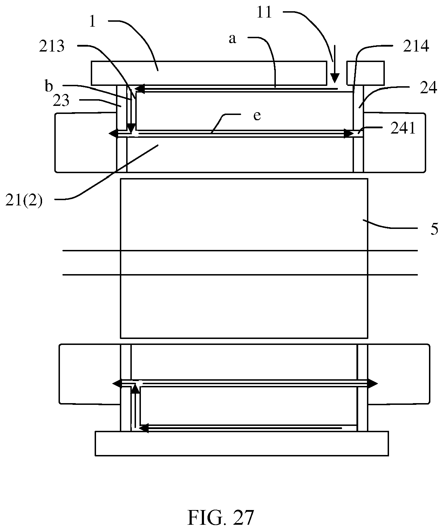

FIG. 27 is a schematic diagram of another structure of a motor according to an embodiment of this application. As shown in FIG. 27, in another embodiment, two ends of the stator core 21 along an axial direction are respectively a first end and a second end. It may be considered that the first end is an end that is of the stator core 21 and that is close to the first end face 213, and the second end is an end that is of the stator core 21 and that is close to the second end face 214. The liquid inlet region is located at the second end, and the liquid inlet region is located on a side that is of the stator core 21 and that is close to the second end face 214. That is, the liquid inlet 11 of the motor in this embodiment is located at an end of the stator core 21 along an axial direction rather than at a center. Coolant flows into the first coolant flow channel a from the second end of the stator core 21, and flows into the first end of the stator core 21 along the first coolant flow channel a.

Refer to FIG. 27. In a specific embodiment, the second end plate 24 may be attached to the second end face 214 of the stator core 21, and the second end has a second nozzle 241. The second nozzle 241 faces the coil winding 22, a fifth coolant flow channel e is disposed inside the stator core 21, the fifth coolant flow channel e extends along an axial direction and penetrates the stator core 21, and the fifth coolant flow channel e may be understood as a hole of the stator core 21 along the axial direction. One end that is of the fifth coolant flow channel e and that is close to the first end face 213 communicates with the second coolant flow channel b, and the other end communicates with the second nozzle 241. In other words, the stator core 21 has the second coolant flow channel b only between the first end face 213 and the first end plate 23, and the coolant enters the second coolant flow channel b located on a side of the first end face 213 after entering the first coolant flow channel a from the liquid inlet region. Then, one part of coolant is sprayed from the first nozzle 232 of the first end plate 23 to the coil winding 22 located on the first end face 213 of the stator core 21, and the other part of the coolant flows to the fifth coolant flow channel e, flows to the second end plate 24 through the fifth coolant flow channel e, and is sprayed from the second nozzle 241 to the coil winding 22 located on the second end face 214 of the stator core 21. In this embodiment, the fifth coolant flow channel e is closer to a heat source. This not only dissipates heat for the coil winding 22, but also helps enhance heat dissipation effect of the motor.

In a specific embodiment, the stator core 21 may include a plurality of fifth coolant flow channels e, and the plurality of fifth coolant flow channels e are arranged along a circumferential direction. This solution helps improve heat dissipation uniformity and heat dissipation effect of the stator core 21. In addition, the stator core 21 may further include a plurality of layers of fifth coolant flow channels e that are arranged along a radial direction of the stator core 21, to increase a flow volume of coolant of the motor and improve heat dissipation effect of the motor.

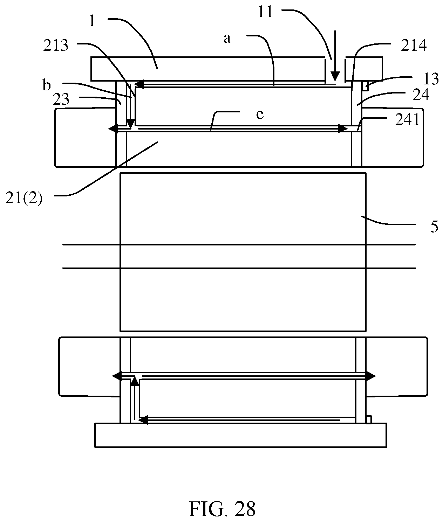

FIG. 28 is a schematic diagram of another structure of a motor according to an embodiment of this application. As shown in FIG. 28, in this embodiment of this application, the housing 1 may further have a convex 13, and the second end plate 24 presses against the convex 13. When the motor is assembled, a side of the stator 2 having the second end plate 24 may first extend into the housing 1, so that the second end plate 24 presses against the convex 13. In this solution, precise positioning may be implemented by using the convex 13, so that an assembly position of the stator 2 is accurate. In addition, the second end plate 24 may further be more closely attached to the stator core 21, and leakage is not likely to occur.

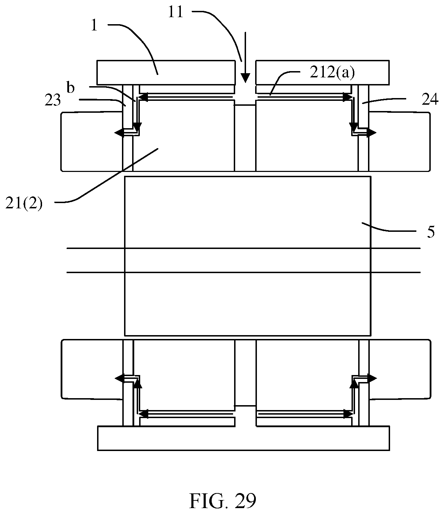

In the accompanying drawings of the foregoing embodiment, an example in which the first coolant flow channel a (the gap 212) is located on a surface of the stator core 21 is used. However, in another embodiment, refer to FIG. 29. FIG. 29 is a schematic diagram of another structure of a motor according to an embodiment of this application. The first coolant flow channel a (the gap 212) may also be located inside the stator core 21. In this case, the gap 212 is a through-hole, and the through-hole is formed as the first coolant flow channel a. Specifically, when the stator core 21 includes the first silicon steel sheet 215, the first sub-gap 2151 is a hole located inside the first silicon steel sheet 215, for example, a round hole or a square hole. This is not limited in this application. In this case, a flow channel groove is manufactured on a surface of the stator core 21, and the flow channel groove extends along a circumferential direction of the stator core 21. The flow channel groove communicates with the liquid inlet 11 and communicates with each first coolant flow channel a, so that after the coolant enters the flow channel groove from the liquid inlet 11, the coolant flows into the first coolant flow channel a. The flow channel groove may be a circular flow channel groove, or may be a local flow channel groove, provided that the flow channel groove can communicate with each first coolant flow channel a. In this solution, a sealing effect of the stator 2 is better, and the first coolant flow channel a does not need to be formed by using the housing 1. This greatly reduces a risk of flow channel leakage.

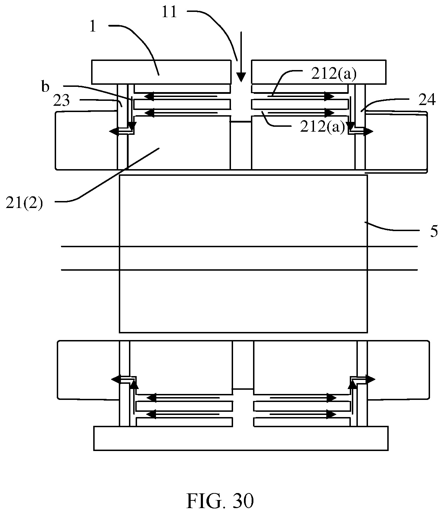

FIG. 30 is a schematic diagram of another structure of a motor according to an embodiment of this application. As shown in FIG. 30, when the first coolant flow channel a is specifically disposed, the stator core 21 may include at least two layers of first coolant flow channels a arranged along a radial direction of the stator core 21, and the first coolant flow channels a at each layer are arranged along a circumferential direction. This solution can increase a flow volume of coolant of the motor, to improve heat dissipation effect of the motor.

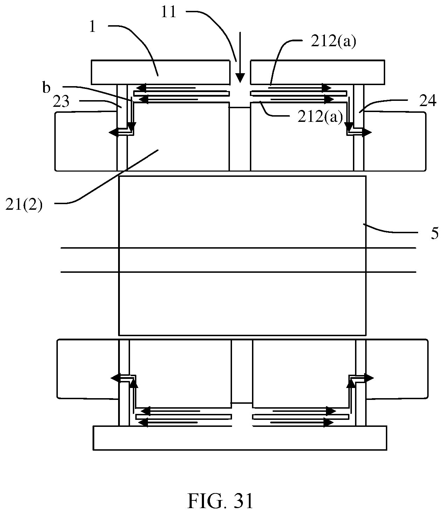

In the embodiment shown in FIG. 30, all the first coolant flow channels a are located inside the stator core 21. However, FIG. 31 is a schematic diagram of another structure of a motor according to an embodiment of this application. As shown in FIG. 31, in still another embodiment, the first coolant flow channel a may be disposed on both a surface and the inside of the stator core 21. In other words, at least one layer of the first coolant flow channels a is disposed on the surface of the stator core 21. This helps increase an amount of coolant that can be transmitted by the first coolant flow channels a, and helps improve heat dissipation effect of the motor.

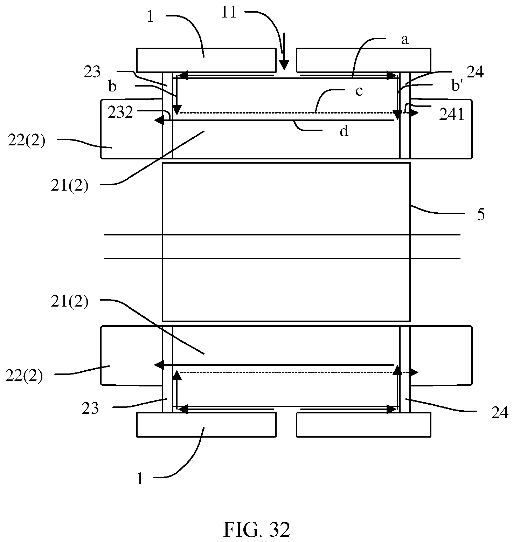

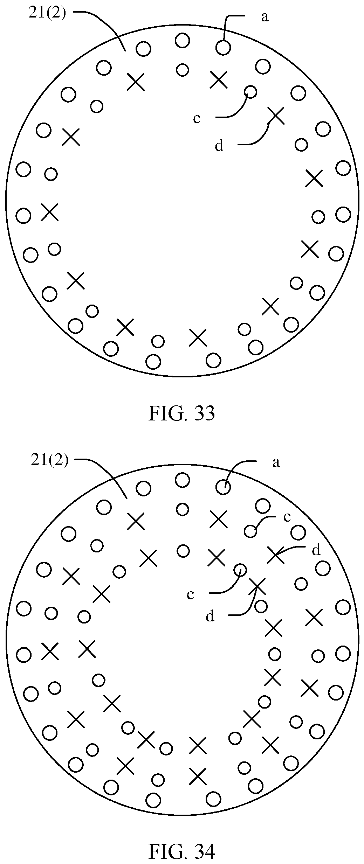

FIG. 32 is a schematic diagram of another structure of a motor according to an embodiment of this application. FIG. 33 is a schematic diagram of a lateral structure of a stator core according to an embodiment of this application. As shown in FIG. 32 and FIG. 33, in a specific embodiment, another second coolant flow channel b' may be formed between the second end plate 24 and the second end face 214, and the second end plate 24 has a second nozzle 241. The stator core 21 is further provided with third coolant flow channels c and fourth coolant flow channels d. The third coolant flow channels c and the fourth coolant flow channels d also extend along an axial direction, penetrate through the stator core 21, and are arranged along a circumferential direction of the stator core 21. In a specific embodiment, the first coolant flow channel a, the third coolant flow channel c, and the fourth coolant flow channel d may be disposed in parallel. One end of the third coolant flow channel c communicates with the second coolant flow channel b of the first end face 213, and the other end communicates with the second nozzle 241. One end of the fourth coolant flow channel d communicates with the another second coolant flow channel b' of the second end face 214, and the other end communicates with the first nozzle 232. That is, coolant enters the first coolant flow channel a from the liquid inlet 11. One part of the coolant flows toward the first end face 213 to the second coolant flow channel b, then flows to the third coolant flow channel c, and then is sprayed from the second nozzle 241 of the second end plate 24 to the coil winding 22 located on the second end face 214. The other part of the coolant flows toward the second end face 214 to the another second coolant flow channel b', then flows to the fourth coolant flow channel d, and then is sprayed from the first nozzle 232 of the first end plate 23 to the coil winding 22 located on the first end face 213. In this embodiment, the coolant is in the stator core 21 for long time. Therefore, heat dissipation effect is improved.

The coolant flows from the first end face 213 to the second end face 214 in the third coolant flow channel c, and flows from the second end face 214 to the first end face 213 in the fourth coolant flow channel d. That is, a flow direction of the coolant in the third coolant flow channel c is opposite to a flow direction of the coolant in the fourth coolant flow channel d. This helps improve heat dissipation uniformity of the stator core 21 along an axial direction.

Still refer to FIG. 33. The third coolant flow channels c and the fourth coolant flow channels d are disposed at spacings. This helps improve heat dissipation uniformity of the stator core of the motor along an axial direction and a circumferential direction.

FIG. 34 is a schematic diagram of another lateral structure of a stator core according to an embodiment of this application. As shown in FIG. 34, in a specific embodiment, the stator core 21 may be provided with at least two layers of flow channels arranged in a radial direction of the stator core 21, and each layer of the flow channels includes the third coolant flow channel c and the fourth coolant flow channel d. This solution helps increase a flow volume of coolant in the motor, to improve the heat dissipation effect of the motor.

In this case, still refer to FIG. 34. In a specific embodiment, the third coolant flow channels c at different layers may be adjacent, and the fourth coolant flow channels d at different layers may be adjacent. In this solution, the third coolant flow channels c are close to each other, and the fourth coolant flow channels d are also close to each other. This helps simplify design of second flow channels at two ends of the stator core 21.

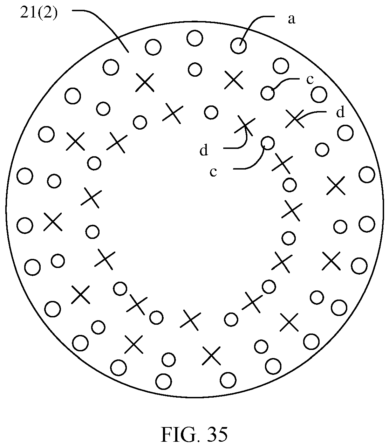

FIG. 35 is a schematic diagram of another lateral structure of a stator core according to an embodiment of this application. As shown in FIG. 35, in another embodiment, the third coolant flow channels c and fourth coolant flow channels d at different layers may be adjacent, that is, the third coolant flow channels c and the fourth coolant flow channels d are sequentially disposed at spacings in any direction. This maximizes a uniform heat dissipation effect of the motor.

When the third coolant flow channel and the fourth coolant flow channel are specifically disposed, the third coolant flow channel and the fourth coolant flow channel may be disposed at the bottom of a first coil slot, and are in a form of grooves. However, in another embodiment, the third coolant flow channel and the fourth coolant flow channel may also be disposed on a side wall of the first coil slot, and are in a form of grooves. In another embodiment, the third coolant flow channel and the fourth coolant flow channel may be further disposed inside the stator core, and are in a form of holes. In this solution, the third coolant flow channel and the fourth coolant flow channel are located inside the stator core, and a leakage problem is not likely to occur.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A stator, comprising a stator core, a coil winding, a first end plate, and a second end plate, wherein
an inner surface of the stator core is provided with a plurality of first coil slots, and the coil winding is at least partially located in the first coil slots; the stator core comprises a plurality of gaps extending along an axial direction, to form first coolant flow channels, the plurality of gaps are arranged along a circumferential direction, and each gap penetrates the stator core along the axial direction; and the first coolant flow channel communicates with a liquid inlet region of the stator core; and
end faces of two ends of the stator core along the axial direction are respectively a first end face and a second end face, the first end plate is mounted on a side of the first end face of the stator core, the second end plate is mounted on a side of the second end face of the stator core, a second coolant flow channel is formed between the first end plate and the first end face, and the second coolant flow channel communicates with the first coolant flow channel; and the first end plate comprises a plurality of first nozzles, the first nozzles communicate with the second coolant flow channel, and the first nozzles face the coil winding.

2. The stator according to claim 1, wherein the gap is a first groove located on an outer surface of the stator core, and the gap and an inner surface that is of a housing and on which the stator is mounted are snap-fitted to form the first coolant flow channel; and/or the gap is a through-hole located in the stator core, and the through-hole forms the first coolant flow channel.

3. The stator according to claim 1 or 2, wherein the stator core comprises at least two layers of the first coolant flow channels that are arranged along a radial direction of the stator core, and the first coolant flow channels at each layer are arranged along the circumferential direction.

4. The stator according to any one of claims 1 to 3, wherein another second coolant flow channel is formed between the second end plate and the second end face, the another second coolant flow channel communicates with the first coolant flow channel, the second end plate comprises a plurality of second nozzles, the second nozzles communicate with the another second coolant flow channel, and the second nozzles face the coil winding.

5. The stator according to claim 4, wherein the first end plate and the second end plate are symmetrically disposed on two sides of the stator core.

6. The stator according to any one of claims 1 to 3, wherein another second coolant flow channel is formed between the second end plate and the second end face, and the second end plate has a second nozzle; the stator core is further provided with a third coolant flow channel and a fourth coolant flow channel, and the third coolant flow channel and the fourth flow channel extend along the axial direction, penetrate the stator core, and are arranged along the circumferential direction of the stator core; and
one end of the third coolant flow channel communicates with the second coolant flow channel on the first end face, and the other end of the third coolant flow channel communicates with the second nozzle; and one end of the fourth coolant flow channel communicates with the another second coolant flow channel on the second end face, and the other end of the fourth coolant flow channel communicates with the first nozzle.

7. The stator according to claim 6, wherein the third coolant flow channel and the fourth coolant flow channel are sequentially disposed at spacings.

8. The stator according to claim 6 or 7, wherein the stator core is provided with at least two layers of flow channels that are arranged along the radial direction of the stator core, and each layer of the flow channels comprises the third coolant flow channel and the fourth coolant flow channel.

9. The stator according to any one of claims 1 to 8, wherein the liquid inlet region is located in a middle part that is along the axial direction and that is of the stator core, so that after coolant enters the first coolant flow channel from the liquid inlet region, the coolant flows to two ends of the first coolant flow channel along the first coolant flow channel.

10. The stator according to any one of claims 1 to 3, wherein the liquid inlet region is located at an end that is of the stator core and that is close to the second end face, so that after coolant enters the first coolant flow channel from the liquid inlet region, the coolant flows to the first end face along the first coolant flow channel.

11. The stator according to claim 10, wherein the second end plate is attached to the end face of the stator core, the second end plate comprises a plurality of second nozzles, and the second nozzles face the coil winding;
a fifth coolant flow channel is disposed inside the stator core, and the fifth coolant flow channel extends along the axial direction and penetrates the stator core; and
one end that is of the fifth coolant flow channel and that is close to the first end face communicates with the second coolant flow channel, and the other end communicates with the second nozzles.

12. The stator according to any one of claims 1 to 11, wherein the first end plate comprises a plate body and a protruding portion fastened to a side that is of the plate body and that faces the stator core, and the protruding portion presses against the end face of the stator core.

13. The stator according to any one of claims 1 to 12, wherein one second coolant flow channel communicates with at least two first coolant flow channels, and one second coolant flow channel communicates with at least two first nozzles.

14. The stator according to any one of claims 1 to 13, wherein a plurality of second coolant flow channels are formed between the first end plate and the first end face, and at least two adjacent second coolant flow channels communicate with each other.

15. The stator according to claim 14, wherein any two adjacent second coolant flow channels communicate with each other.

16. The stator according to any one of claims 1 to 13, wherein one second coolant flow channel is formed between the first end plate and the first end face, the second coolant flow channel communicates with all the first coolant flow channels, and the second coolant flow channel communicates with all the first nozzles.

17. The stator according to any one of claims 1 to 16, wherein the first nozzles are distributed in a local region of the first end plate along the circumferential direction.

18. The stator according to any one of claims 1 to 17, wherein the first end plate has a preset position, and a region farther from the preset position indicates a lower arrangement density of the first nozzles.

19. The stator according to any one of claims 1 to 18, wherein the first end plate comprises at least two layers of the first nozzles that are arranged along the radial direction of the stator core.

20. The stator according to claim 19, wherein spray directions of two layers of the first nozzles are different.

21. The stator according to any one of claims 1 to 20, wherein inner surfaces of the first end plate and the second end plate comprise a plurality of second coil slots, the second coil slots overlap with the first coil slots, and the coil winding is at least partially located in the second coil slots.

22. The stator according to any one of claims 1 to 21, wherein the stator core comprises a first silicon steel sheet and a second silicon steel sheet, the first silicon steel sheet has a first sub-gap, a plurality of first silicon steel sheets are stacked to form a body the stator core, and the first sub-gaps of the plurality of first silicon steel sheets are connected to form the gap; and the second silicon steel sheets are stacked on two ends of the body of the stator core, the second silicon steel sheet has a second sub-gap, and an end face of the first silicon steel sheet, the second sub-gap, and an end face of the first end plate form the second coolant flow channel.

23. The stator according to claim 22, further comprising a third silicon steel sheet, wherein the third silicon steel sheets are stacked between the second silicon steel sheet and the body of the stator core, the third silicon steel sheet has a third sub-gap, and the third sub-gap at least partially overlaps with at least two adjacent second sub-gaps to communicate with at least two adjacent second coolant flow channels.

24. The stator according to claim 23, wherein any two adjacent second sub-gaps communicate with a same third sub-gap, so that any two adjacent second coolant flow channels communicate with each other.

25. The stator according to any one of claims 1 to 24, wherein the first end plate and the second end plate are plastic end plates or metal end plates.

26. The stator according to any one of claims 1 to 25, wherein the first end plate and the second end plate are silicon steel sheets.

27. The stator according to any one of claims 1 to 26, wherein the first end plate comprises an end plate body and a nozzle fitting fastened to the end plate body, the end plate body has a liquid outlet communicating with the second coolant flow channel, an area of the liquid outlet is greater than an area of the first nozzle, the first nozzle is formed on the nozzle fitting, and the first nozzle is opposite to the liquid outlet.

28. The stator according to claim 27, wherein the nozzle fitting is a fuel injection plate, and the first nozzle is an opening of the fuel injection plate; or the nozzle fitting is a nozzle, and the first nozzle is an opening of the nozzle.

29. A motor, comprising a housing and the stator according to any one of claims 1 to 28, wherein the housing has a liquid inlet, the stator is assembled in the housing, and the liquid inlet communicates with a liquid inlet region of the stator core.

30. The motor according to claim 29, wherein a second groove extending along a circumferential direction is inside the housing, the second groove communicates with the liquid inlet, and the second groove is opposite to the liquid inlet region of the stator core, to transport coolant to each first coolant flow channel.

31. The motor according to claim 29 or 30, wherein a first end plate and a second end plate are in a sealed connection to an inner surface of the housing; and
the first end plate and the second end plate are interference-fitted in the housing, or a sealing element is filled between the housing and each of the first end plate and the second end plate.

32. The motor according to any one of claims 29 to 31, wherein the housing further comprises a convex, and the second end plate presses against the convex.

33. A powertrain, comprising a gearbox and the motor according to any one of claims 29 to 32, wherein the motor is connected to the gearbox via a transmission shaft.

34. A mechanical device, comprising an output portion, a drive mechanism, and the motor according to any one of claims 29 to 32, wherein the motor is connected to the output portion via the drive mechanism.
